# EUROPEAN PATENT APPLICATION

(11) **EP 4 477 628 A1**
(43) Date of publication of application: **18.12.2024**
(21) Application number: 23887725.2
(22) Date of filing: 13.10.2023
(51) Int. Cl.: C03B 37/012, C03B 37/027, G02B 6/02, G02B 6/032

(54) **INTEGRATED HOLLOW-CORE OPTICAL FIBER PREFORM, OPTICAL FIBER AND MANUFACTURING METHOD THEREFOR**

(30) Priority: 10.11.2022 CN 202211405247
(71) Applicant: Yangtze Optical Fibre and Cable Joint Stock Limited Company, Wuhan, Hubei 430074 (CN)
(72) Inventor: LI, Peng, Wuhan, Hubei 430074 (CN); MAO, Mingfeng, Wuhan, Hubei 430074 (CN); TIAN, Qiaoli, Wuhan, Hubei 430074 (CN); ZHANG, Lei, Wuhan, Hubei 430074 (CN); WANG, Ruichun, Wuhan, Hubei 430074 (CN)
(74) Representative: Thoma, Michael
(86) International application number: PCT/CN2023/124540
(87) International publication number: WO 2024/099033

(57) **Abstract**

The present disclosure relates to an integrated hollow-core optical fiber preform, an optical fiber and a fabrication method thereof. Initially, holes are drilled to obtain a preform which is then subjected to a drawing process with gas fed into the drilled holes for pressurization control, resulting in an optical fiber with an anti-resonant ring structure. This method employs mechanical drilling to achieve precise positioning of the azimuth angle of the anti-resonant unit, ensuring axial uniformity and preventing any azimuthal shift during the drawing process. Furthermore, no additional materials are introduced for positioning the anti-resonant unit, thereby minimizing contamination from impurities and enhancing properties such as attenuation and strength of the optical fiber. Additionally, gas pressure control expands the anti-resonant unit during the drawing process, reducing its wall thickness and consequently lowering attenuation in this hollow-core optical fiber.

## Description

### TECHNICAL FIELD

The present disclosure belongs to the technical field of optical fiber communications, and more particularly, relates to an integrated hollow-core optical fiber preform and a fabrication method of an optical fiber, which can be used for preparing a hollow-core micro-structured optical fiber.

### BACKGROUND

Hollow-core micro-structured optical fibers have the characteristics of simple structure, single-mode light conduction with hollow core and wide transmission spectrum, which have important applications in the fields of light-filler interaction, non-linear optics, gas detection, gas laser generation, optofluidics and the like. Large air hole fiber core light conduction has the properties of ultra-low Rayleigh scattering, low non-linear coefficient and tunable dispersion, which can provide a higher laser-damaged threshold, allowing potential applications in high-power laser transmission, UV/mid-IR light transmission, pulse compression, optical soliton transmission and the like. The ultra-low loss, low dispersion, low non-linearity, and propagation speed close to the speed of light of an air core can contribute to the development of hollow-core optical fiber communication transmission and communication devices, thereby laying a foundation for the construction and development of the next generation of ultra-large capacity, low latency, and high-speed optical communication systems.

Even though the hollow-core optical fibers have great advantages in design and application, their transmission loss has been higher than that of traditional quartz optical fibers. In recent years, it has been found that hollow-core optical fiber based on the principle of anti-resonance can effectively reduce the transmission loss under a reasonable structural design, and has the potential to be used as an ultra-long distance communication optical fiber. Further reduction of attenuation is an important problem in the field of hollow-core micro-structured optical fiber manufacturing.

Although anti-resonant hollow-core optical fibers, especially those with nested structural elements, are known to significantly reduce the attenuation of optical fibers, anti-resonant conditions may change due to the complexity of their internal geometric shapes and minimal geometric deviations, thus making it difficult to produce them accurately and reproducibly. In addition, an anti-resonant layer with a smaller wall thickness is conducive to achieving a lower loss as well as a wider bandwidth. Therefore, another problem to be solved is how to prepare the anti-resonant layer with the smaller wall thickness is also an urgent problem.

### SUMMARY

In view of the above defects or improvement demands in the prior art, the present disclosure provides a hollow-core micro-structured optical fiber preform, an optical fiber, and a fabrication method thereof, with the objective of providing a method for manufacturing an anti-resonant hollow-core optical fiber with higher accuracy of positioning, which avoids the limitation of a traditional manufacturing method.

In order to solve above problem, the disclosure may be implemented by the following solutions.

An integrated hollow-core optical fiber preform comprises a jacket tube with multiple circumferentially distributed axial holes formed in a wall of the jacket tube, an internal surface of each of the axial holes at a position closest to a center of the jacket tube having a minimum distance ti from an internal surface of the jacket tube, and a ratio of the minimum distance ti to a diameter of the axial hole being less than or equal to 0.35.

Further, the axial holes are uniformly distributed along a circle, with a number ≥ 4.

Further, a ratio of an inner diameter of the jacket tube and an outer diameter ranges from 0.2 to 0.8.

Further, a capillary tube is inserted into each of the axial holes to form an optical fiber preform with a nested structure.

Further, a quartz sheet is inserted into each of the axial holes to form an optical fiber preform with a connecting sheet structure, and the quartz sheets are arranged perpendicular to a radial line of the jacket tube.

A fabrication method of a hollow-core micro-structured optical fiber, comprises steps of:
i) selecting a jacket tube and performing drilling from an end of the jacket tube to prepare the aforementioned integrated hollow-core optical fiber preform; and
ii) performing hot-drawing on the integrated hollow-core optical fiber preform obtained in step i), and during such a drawing process, feeding a gas into the axial holes to create a gas pressure in each of the axial holes higher than that in a center hole of the jacket tube, so that a pressure difference between each of the axial holes and the center hole of the jacket tube along with surface tension causes the drawn axial holes to protrude towards the center hole of the jacket tube to form anti-resonant rings with a negative curvature, all of which constitute a ring-shaped anti-resonant layer, with an area enclosed by the anti-resonant layer constituting a hollow fiber core, thereby forming the hollow-core micro-structured optical fiber with the negative-curvature anti-resonant rings.

Further, in step i), after drilling, an acid liquid is fed to corrode the axial holes, such that a ratio of the minimum distance ti between the internal surface of each of the axial holes and the internal surface of the jacket tube to the diameter of each of the axial holes is less than or equal to 0.1.

Preferably, the acid liquid is hydrofluoric acid.

Further, in step i), when each of the axial holes is inserted with a capillary tube, which is further fed with a gas, gas pressures inside the capillary tubes, the axial holes and the center hole of the jacket tube are controlled to be sequentially reduced in gradient.

Further, in step i), the gas fed into the axial holes or the capillary tubes is selected from any one or more of compressed air, nitrogen, helium and argon.

Further, in step ii), the anti-resonant layer and the drawn jacket tube constitute a cladding, wherein the cladding has an outer diameter ranging from 100 to 300 µm, and the fiber core has a diameter ranging from 10 to 50 µm.

Further, in step ii), each of the anti-resonant rings has a minimum wall thickness less than or equal to 2 µm, preferably less than or equal to 1 µm.

The hollow-core micro-structured optical fiber prepared by the disclosed method possesses a relatively low transmission loss, with a minimum of ≤30 dB/km, preferably ≤1 dB/km.

Compared with the existing technologies, the disclosure can achieve the following beneficial effects by utilizing the above technical solutions.

Firstly, according to the hollow-core micro-structured optical fiber preform provided by the disclosure, unlike a traditional "piling-drawing" approach, an initial preform is obtained by drilling holes, and then pressurization control is performed on those holes during the drawing process to obtain an optical fiber with an anti-resonant ring structure. One of the beneficial effects of the method is that an anti-resonant unit can be accurately positioned by mechanical drilling, and axial uniformity can be ensured, thereby avoiding azimuthal shift of the anti-resonant unit during the drawing process.

Secondly, in our solutions, no other materials are introduced for positioning the anti-resonant unit, reducing contamination caused by impurities and thereby improving properties such as attenuation and strength of the optical fiber.

Finally, according to the disclosed invention, during the drawing process, the anti-resonant unit is expanded by gas pressure control, which further reduces the wall thickness of the anti-resonant unit, thereby lowering the attenuation of the optical fiber.

### BRIEF DESCRIPTION OF THE DRAWINGS

Fig. 1 is a schematic structural diagram of an optical fiber preform with a hollow-core micro-structure provided by Embodiment I of the disclosure;
Fig. 2 is a schematic structural diagram of a hollow-core micro-structured optical fiber provided by Embodiment I of the disclosure;
Fig. 3 is a schematic structural diagram of an optical fiber preform with a hollow-core micro-structure provided by Embodiment II of the disclosure;
Fig. 4 is a schematic structural diagram of a hollow-core micro-structured optical fiber provided by Embodiment II of the disclosure;
Fig. 5 is a schematic structural diagram of an optical fiber preform with a nested structure provided by Embodiment III of the disclosure;
Fig. 6 is a schematic structural diagram of a hollow-core micro-structured optical fiber provided by Embodiment III of the disclosure;
Fig. 7 is a schematic structural diagram of an optical fiber preform with a connecting sheet structure provided by Embodiment IV of the disclosure; and
Fig. 8 is a schematic structural diagram of a hollow-core micro-structured optical fiber provided by Embodiment IV of the disclosure.
1-optical fiber preform; 2-jacket tube; 3 -axial hole; 4-hollow-core micro-structured optical fiber; 5-optical fiber cladding; 6-anti-resonant ring; 7-optical fiber hollow-core fiber core,; 10-capillary tube; 11-first layer of anti-resonant rings; 12-second layer of anti-resonant rings; 13-quartz sheet; 14-anti-resonant ring; 15-anti-resonant sheet; 16-axial hole; 17-intemal surface of 2; 18-large circular hole

### DETAILED DESCRIPTION

The technical problems to be solved, technical solutions and advantages of the disclosure will become apparent from the following detailed description with reference to the embodiments. It should be understood that the specific embodiments described here are only intended to explain the disclosure, but not to construct limitation to the disclosure. Furthermore, the technical features involved in various implementations of the disclosure described below may be combined with each other as long as they do not constitute a conflict with each other.

The disclosure provides a fabrication method of a hollow-core micro-structured optical fiber, comprising the following steps.

At step i), a jacket tube is selected and drilling is performed from an end of the jacket tube to prepare an integrated hollow-core optical fiber preform.

The integrated hollow-core optical fiber preform comprises a jacket tube with multiple circumferentially distributed axial holes formed in a wall of the jacket tube, an internal surface of each of the axial holes at a position closest to a center of the jacket tube having a minimum distance ti from an internal surface of the jacket tube, and a ratio of the minimum distance ti to a diameter of the axial hole being less than or equal to 0.35.

At step ii), hot-drawing is performed on the integrated hollow-core optical fiber preform obtained in step i), and during such a drawing process, a gas is fed into the axial holes to create a gas pressure in each of the axial holes higher than that in a center hole of the jacket tube, so that a pressure difference between each of the axial holes and the center hole of the jacket tube along with surface tension causes the drawn axial holes to protrude towards the center hole of the jacket tube to form anti-resonant rings with a negative curvature, all of which constitute a ring-shaped anti-resonant layer, with an area enclosed by the anti-resonant layer constituting a hollow fiber core, thereby forming the hollow-core micro-structured optical fiber with the negative-curvature anti-resonant rings.

### Embodiment I

### Fabrication of Hollow Core Fiber Preform

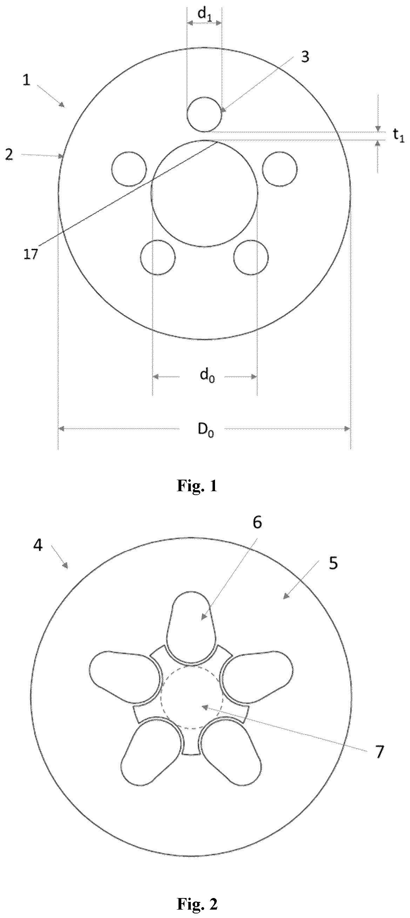

As shown in Fig. 1, a jacket tube 2 made from a material of pure silicon dioxide is selected, which has an inner diameter d₀ of 30 mm, an outer diameter D₀ of 50 mm and a length of 1000 mm. Five axial holes 3 are formed in the jacket tube by drilling, where the axial holes are arranged in an isoazimuth mode (with an azimuth angle of 72°), each of the axial holes 3 has a diameter di of 6.5 mm, and a ratio of a minimum distance ti between an internal surface of each of the axial holes 3 and an internal surface 17 of the jacket tube to the diameter di of the axial hole is 0.08. Then, an optical fiber preform 1 with a hollow-core micro-structure is prepared.

### Fabrication of Hollow-Core Micro-Structured Optical Fiber

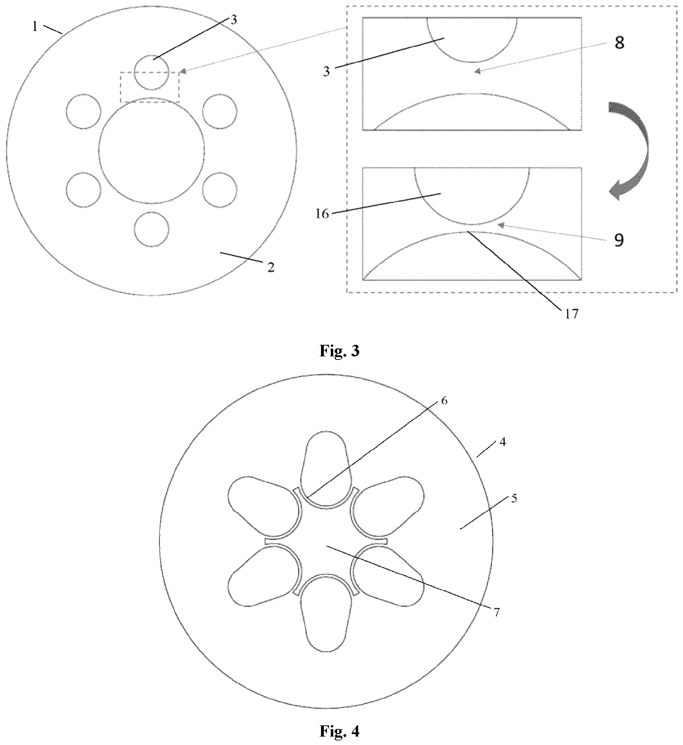

The optical fiber preform 1 with the hollow-core micro-structure is placed into a hot-drawing furnace for drawing at a furnace temperature of 1710°C, a hollow-core portion in the middle of the preform maintains a pressure value equal to the atmospheric pressure, and a gas of equal pressure is fed into the five axial holes at a pressure of 2.9 KPa. The pressure difference between the inside and outside of the axial holes leads to the expansion of the axial holes after drawing, which results in formation of anti-resonant rings 6, finally forming a hollow-core micro-structured optical fiber 4 as shown in Fig. 3. An optical fiber cladding 5 has an outer diameter of 124.7 µm, an optical fiber hollow-core fiber core 7 has a diameter of 27.4 µm, and each of the anti-resonant rings has a minimum wall thickness of 637 nm. The attenuation of the optical fiber at 1550 nm is 12.7 dB/km.

### Embodiment II

### Fabrication of Optical Fiber Preform

As shown in Fig. 3, a jacket tube made from a material of pure silicon dioxide is selected, which has an inner diameter of 40mm, an outer diameter of 80mm and a length of 900 mm. Six axial holes 3 are formed in the jacket tube by drilling, where the axial holes 3 are arranged in an isoazimuth mode (with an azimuth angle of 60°), each of the axial holes 3 has a diameter of 8.2 mm, and a ratio of a minimum distance 8 between an internal surface of each of the axial holes 3 and an internal surface 17 of the jacket tube to the diameter of the axial hole 3 is 0.21. The drilled jacket tube is placed into an acid liquid for corroding, and a ratio of a minimum distance 9 between an internal surface of each of corroded axial holes 16 and the internal surface 17 of the jacket tube to the diameter of the axial hole 16 is 0.06. Then, an optical fiber preform 1 with a hollow-core micro-structure is prepared.

### Fabrication of Hollow-Core Micro-Structured Optical Fiber

The optical fiber preform 1 with the hollow-core micro-structure is placed into a hot-drawing furnace for drawing at a furnace temperature of 1760°C, a gas is fed into a hollow-core portion in the middle of the preform to maintain a gas pressure near 0.56 Kpa, and a gas of equal pressure is fed into the six axial holes 16 at a pressure of 1.9 KPa. The pressure difference between the inside and outside of the axial holes 16 leads to the expansion of the axial holes after drawing, which results in formation of anti-resonant rings 6, finally forming a hollow-core micro-structured optical fiber 4 as shown in Fig. 4. An optical fiber cladding 5 has an outer diameter of 243 µm, an optical fiber hollow-core fiber core 7 has a diameter of 42.7 µm, and each of the anti-resonant rings 6 has a minimum wall thickness of 336 nm. The attenuation of the optical fiber at 1550 nm is 1.45 dB/km.

### Embodiment III

### Fabrication of Optical Fiber Preform

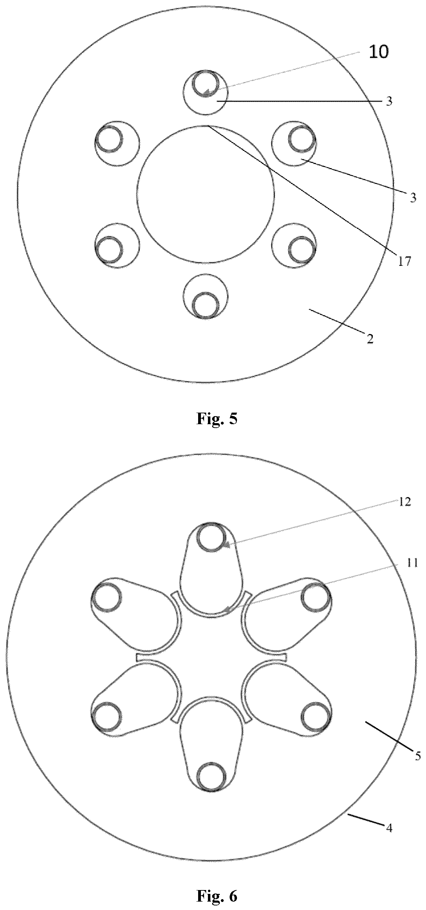

As shown in Fig. 5, a jacket tube 2 made from a material of pure silicon dioxide is selected, which has an inner diameter of 13 mm, an outer diameter of 28 mm and a length of 700 mm. Six axial holes 3 are formed in the jacket tube by drilling, where the axial holes 3 are arranged in an isoazimuth mode (with an azimuth angle of 60°), each of the axial holes has a diameter of 2.4 mm, and a ratio of a minimum distance between an internal surface of each of the axial holes and an internal surface 17 of the jacket tube to the diameter of the axial hole is 0.13. The drilled jacket tube is placed into an acid liquid for corroding, and a ratio of a minimum distance between an internal surface of each of corroded axial holes 3 and the internal surface 17 of the jacket tube to the diameter of the axial hole is 0.06. Then, each of the axial holes is inserted with a capillary tube 10 with an outer diameter of 1.1 mm and a wall thickness of 0.12 mm. Then, an optical fiber preform 1 with a nested structure is prepared.

### Fabrication of Hollow-Core Micro-Structured Optical Fiber

The optical fiber preform 1 with the nested structure is placed into a hot-drawing furnace for drawing, at a furnace temperature of 1770°C, a hollow-core portion in the middle of the preform maintains a pressure value equal to the atmospheric pressure, a gas of equal pressure is fed into the six axial holes 3 at a pressure of 3.7 KPa, and a gas of equal pressure is fed into the six nested capillary tubes at a pressure of 4.6 KPa. The pressure difference between the inside and outside of the axial holes as well as the pressure difference between the inside and outside of the nested capillary tubes result in formation of anti-resonant rings with a nested structure, and finally a hollow-core micro-structured optical fiber 4 with a nested structure as shown in Fig. 6 is formed. An optical fiber cladding 5 has an outer diameter of 153 µm, an optical fiber hollow-core fiber core has a diameter of 33.2 µm, a first layer of anti-resonant rings 11 has a minimum wall thickness of 217 nm, and a second layer of anti-resonant rings 12 has a minimum wall thickness of 265 nm. The attenuation of the optical fiber at 1550 nm is 0.78 dB/km.

### Embodiment IV

### Fabrication of Optical Fiber Preform

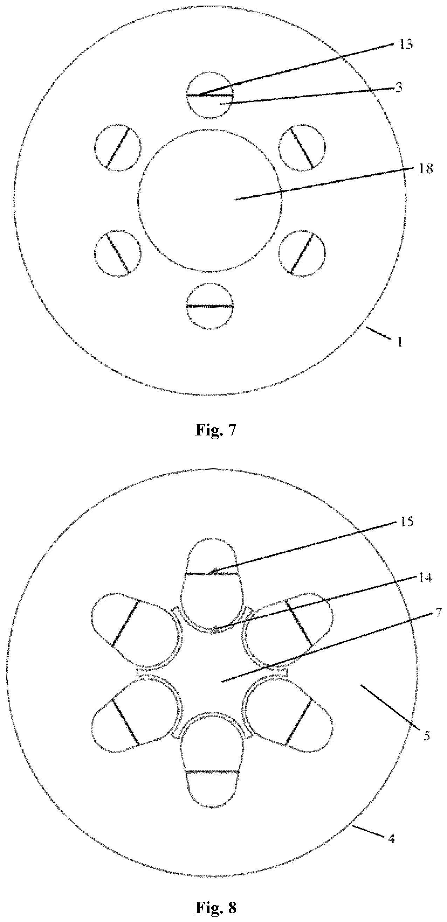

As shown in Fig. 7, a solid-core rod made from a material of pure silicon dioxide is selected, which has an outer diameter of 63 mm and a length of 1000 mm. Six small circular holes are formed in the solid-core rod as axial holes 3 by drilling, where the axial holes 3 are arranged in an isoazimuth mode (with an azimuth angle of 60°), and each of the axial holes has a diameter of 7.4 mm; and then a large circular hole 18 is drilled in the center of the solid-core rod as a center hole of the jacket tube, where a ratio of a minimum distance between an internal surface of each of the axial holes 3 and an internal surface of a center hole of the jacket tube (large circular hole 18) to the diameter of the axial hole is 0.16. The drilled jacket tube is placed into an acid liquid for corroding, and a ratio of a minimum distance between an internal surface of each of corroded axial holes and the internal surface of the center hole of the jacket tube to the diameter of the axial hole is 0.07. Then, each of the axial holes is inserted with a quartz sheet 13 with a wall thickness of 0.19 mm, whose perpendicular bisector passes through a circle center of the solid-core rod. Then, an optical fiber preform 1 with a connecting sheet structure is prepared.

### Fabrication of Hollow-Core Micro-Structured Optical Fiber

The optical fiber preform 1 with the connecting sheet structure is placed into a hot-drawing furnace for drawing at a furnace temperature of 1735°C, a hollow-core portion in the middle of the preform maintains a pressure value equal to the atmospheric pressure, and a gas of equal pressure is fed into the six axial holes at a pressure of 2.6 KPa. The pressure difference between the inside and outside of the axial holes leads to the expansion of the axial holes after drawing, which results in formation of anti-resonant rings 14, the quartz sheets 13 inserted into the axial holes 3 form anti-resonant sheets 15, all of which constitutes a second anti-resonant layer, and finally a hollow-core micro-structured optical fiber 4 as shown in Fig. 8 is formed. An optical fiber cladding 5 has an outer diameter of 201 µm, an optical fiber hollow-core fiber core 7 has a diameter of 53.2 µm, each of the anti-resonant rings 14 has a minimum wall thickness of 616 nm, and each of the anti-resonant sheets 15 has a minimum wall thickness of 543 nm. The attenuation of the optical fiber at 1550 nm is 1.54 dB/km.

Those skilled in the art will understand that the above description only involves embodiments of the disclosure, but is not intended to limit the invention. Any modification, substitution and improvement within the spirit and the principle of the disclosure shall fall into the protection scope of the disclosure.

## Claims

1. An integrated hollow-core optical fiber preform, comprising a jacket tube with multiple circumferentially distributed axial holes formed in a wall of the jacket tube, an internal surface of each of the axial holes at a position closest to a center of the jacket tube having a minimum distance ti from an internal surface of the jacket tube, and a ratio of the minimum distance ti to a diameter of the axial hole being less than or equal to 0.35.

2. The integrated hollow-core optical fiber preform according to claim 1, wherein the axial holes are uniformly distributed along a circle, with a number ≥ 4.

3. The integrated hollow-core optical fiber preform according to claim 1, wherein a ratio of an inner diameter of the jacket tube and an outer diameter ranges from 0.2 to 0.8.

4. The integrated hollow-core optical fiber preform according to claim 1, wherein a capillary tube is inserted into each of the axial holes to form an optical fiber preform with a nested structure.

5. The integrated hollow-core optical fiber preform according to claim 1, wherein a quartz sheet is inserted into each of the axial holes to form an optical fiber preform with a connecting sheet structure.

6. A fabrication method of a hollow-core micro-structured optical fiber, comprising steps of:
i) selecting a jacket tube and performing drilling from an end of the jacket tube to prepare the integrated hollow-core optical fiber preform according to any one of claims 1-5; and
ii) performing hot-drawing on the integrated hollow-core optical fiber preform obtained in step i), and during such a drawing process, feeding a gas into the axial holes to create a gas pressure in each of the axial holes higher than that in a center hole of the jacket tube, so that a pressure difference between each of the axial holes and the center hole of the jacket tube along with surface tension causes the drawn axial holes to protrude towards the center hole of the jacket tube to form anti-resonant rings with a negative curvature, all of which constitute a ring-shaped anti-resonant layer, with an area enclosed by the anti-resonant layer constituting a hollow fiber core, thereby forming the hollow-core micro-structured optical fiber with the negative-curvature anti-resonant rings.

7. The fabrication method of the hollow-core micro-structured optical fiber according to claim 6, wherein in step i), after drilling, an acid liquid is fed to corrode the axial holes, such that a ratio of the minimum distance ti between the internal surface of each of the axial holes and the internal surface of the jacket tube to the diameter of each of the axial holes is less than or equal to 0.1.

8. The fabrication method of the hollow-core micro-structured optical fiber according to claim 7, wherein in step i), the acid liquid is hydrofluoric acid.

9. The fabrication method of the hollow-core micro-structured optical fiber according to claim 6, wherein in step i), when each of the axial holes is embedded with a capillary tube, which is further fed with a gas, gas pressures inside the capillary tubes, the axial holes and the center hole of the jacket tube are controlled to be reduced in gradient.

10. The fabrication method of the hollow-core micro-structured optical fiber according to claim 9, wherein in step i), the gas fed into the axial holes or the capillary tubes is selected from any one or more of compressed air, nitrogen, helium and argon.

11. The fabrication method of the hollow-core micro-structured optical fiber according to claim 6, wherein in step ii), the anti-resonant layer and the drawn jacket tube constitute a cladding, wherein the cladding has an outer diameter ranging from 100 to 300 µm, and the fiber core has a diameter ranging from 10 to 50 µm.

12. The fabrication method of the hollow-core micro-structured optical fiber according to claim 6, wherein in step ii), each of the anti-resonant rings has a minimum wall thickness less than or equal to 2 µm.

13. A hollow-core micro-structured optical fiber, prepared by the fabrication method according to any one of claims 6-12.
